# EUROPEAN PATENT SPECIFICATION

(11) **EP 3 896 616 B1**
(45) Date of publication and mention of the grant of the patent: **18.02.2026**
(21) Application number: 20169370.2
(22) Date of filing: 14.04.2020
(51) Int. Cl.: G06N 3/09, G06N 3/096, G06N 3/0985

(54) **METHOD FOR OPTIMIZING A NEURAL NETWORK MODEL**
VERFAHREN ZUR OPTIMIERUNG EINES NEURONALEN NETZWERKMODELLS
PROCÉDÉ D'OPTIMISATION D'UN MODÈLE DE RÉSEAU NEURONAL

(43) Date of publication of application: 20.10.2021
(73) Proprietor: AUMOVIO Autonomous Mobility Germany GmbH, 85057 Ingolstadt (DE)
(72) Inventor: Kurude, Aditya Anil - c/o Conti Temic microelectronic GmbH, 90411 Nürnberg (DE); Lukacs, Pal - c/o Conti Temic microelectronic GmbH, 90411 Nürnberg (DE)
(74) Representative: Aumovio Corporation

(56) References cited:
- HAO YU ET AL: "Parallel Restarted SGD with Faster Convergence and Less Communication: Demystifying Why Model Averaging Works for Deep Learning", ARXIV.ORG, CORNELL UNIVERSITY LIBRARY, 201 OLIN LIBRARY CORNELL UNIVERSITY ITHACA, NY 14853, 17 July 2018 (2018-07-17), XP081426580
- PRANAY SHARMA ET AL: "Parallel Restarted SPIDER -- Communication Efficient Distributed Nonconvex Optimization with Optimal Computation Complexity", ARXIV.ORG, CORNELL UNIVERSITY LIBRARY, 201 OLIN LIBRARY CORNELL UNIVERSITY ITHACA, NY 14853, 12 December 2019 (2019-12-12), XP081550622
- MICHAEL R ZHANG ET AL: "Lookahead Optimizer: k steps forward, 1 step back", 3 December 2019 (2019-12-03), XP055729952, Retrieved from the Internet <URL:https://arxiv.org/pdf/1907.08610.pdf> [retrieved on 20200911]
- SORIN GRIGORESCU ET AL: "A Survey of Deep Learning Techniques for Autonomous Driving", ARXIV.ORG, CORNELL UNIVERSITY LIBRARY, 201 OLIN LIBRARY CORNELL UNIVERSITY ITHACA, NY 14853, 17 October 2019 (2019-10-17), XP081627565, DOI: 10.1002/ROB.21918

## Description

### TECHNICAL FIELD

The invention relates to a computer-implemented method for adapting a neural network model, a neural network, a use of the neural network for an automotive application, a computer program element, and a computer-readable medium.

### BACKGROUND

For learning in neural networks, there exist several approaches to find a minimum of loss functions. For example, the learning rate is adapted to the gradient in each cycle. Cyclically changing the learning rate helps to traverse faster on the loss landscape through saddle points, i.e., where the gradient of the loss function is low. These methods, however, lose some of their potential when working with models that have a small number of parameters, compared to typical Deep Neural Network models to find global minima in models with few parameters. Repetitive restart techniques exploit the properties of a smooth convex function, in order to remove the ripples observed in the loss function in cases where the momentum has exceeded a critical value. These techniques are restricted to convex function-based properties to achieve accelerated convergence but do not cannot guarantee improved model performance as they do not seek a global minimum.

HAO YU ET AL: "Parallel Restarted SGD with Faster Convergence and Less Communication: Demystifying Why Model Averaging Works for Deep Learning" describes a parallel SGD (Stochastic Gradient Descent), with distributed training of deep neural networks over multiple workers where iteration indices are divided into epochs of a distinct length, then in each epochs all workers are running SGD in parallel with the same initial point y that is the average of final individual solutions from the previous epoch.

SORIN GRIGORESCU ET AL: "A Survey of Deep Learning Techniques for Autonomous Driving" describes a survey of the current state-of-the-art on deep learning technologies used in autonomous driving.

### SUMMARY

There may, therefore, be a need to improve the performance of a neural network. The problem is solved by the subject-matter of the independent claims. Embodiments are provided by the dependent claims, the following description and the accompanying figures.

The described embodiments similarly pertain to the system for configuring a neural network model, the computer program and the computer-readable medium. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a computer-implemented method for training a neural network model of an advanced driver assistance system, ADAS, wherein the neural network model is configured to perform scene recognition, is provided, comprising the following steps. In a first step, in a plurality of successive cycles a plurality of local minima in a loss landscape of a loss function; wherein the loss function is based on the neural network's output for a training dataset; are determined, and in a subsequent step, a globally optimal minimum in the loss landscape of the loss function is selected out of the plurality detected local minimum. A performance of the neural network is evaluated using a key performance indicator, KPI, measured on a validation dataset; wherein the key performance indicator is a recognized scene.

The "loss landscape" of a loss function is to be understood as the multidimensional shape of the loss function which may have gradients so that there are one or more local minima and local maxima.

Thus, a hybrid training procedure with two components is introduced. "Hybrid" means using optimization concepts from traditional convex function based optimization, and additionally using elements from non-convex global optimization. The first component of the hybrid training procedure searches for the local minima of the loss landscape. A usual gradient descent optimizer may be used to find local minima. It is not necessary to find all of the local minima of the loss landscape. There may exist conditions to stop the search as discussed further below. The second component, which is gradient free, selects the lowest of the found local minima, which is termed the "globally optimal minimum". As the search may have been stopped before determining all of the local minima of the loss function, "globally optimal minimum" is to be understood as the lowest minimum among all of the determined local minima. The globally optimal minimum may be determined preferably by storing a current local minimum only if it is lower than the previous one, or, for example, by first storing all detected local minima and determining the lowest one in a second step. "Storing a global minimum" means besides storing the value and, maybe, an index or identifier of the minimum especially also storing the state of the network model, such that the network can be set into the state with the determined globally optimal minimum.

The step of determining in a plurality of successive cycles a plurality of local minima in a loss landscape of a loss function comprises as an initial step resetting an optimizer state of an optimizer of the neural network. An optimizer is a central element in the neural network, for example, to vary the momentum, the learning rates, and parameters such as weights or biases of the neurons in the network layers, which is part of the gradient descent based learning process. In other words, according to this embodiment, the parameters that are varied by the optimizer to find a local minimum are reset in order to find a new local minimum. The resetting of the optimizer state is therefore performed once per local minimum to be found, before starting the optimization process for finding a local minimum.

According to an embodiment, the step of detecting a local minimum in a loss landscape is performed using a gradient descent-type optimizer exhibiting a momentum-based behaviour. At the end of a cycle, the optimizer may get stuck in a local minimum. The momentum term is therefore reset which enable the optimizer to escape the local minimum, and to find another local minimum. The gradient descent optimizer may therefore be a momentum-based optimizer or, more general, a gradient descent type optimizer that exhibits this behaviour. Further, by using a momentum, the efficiency of the optimizer is ensured and a jump-over of a local minimum is avoided.

Good local minima may be clustered close together in the loss landscape to be located close together in the loss landscape, and thus warm starts from previously visited local minima are good initializations for further search. Preferably, optimizers with second-order momentum terms may be used as, for example, the Adaptive Moment Estimation (Adam) optimizer that computes adaptive learning rates for each parameter. In addition to storing an exponentially decaying average of past squared gradients, Adam also keeps an exponentially decaying average of past gradients, similar to momentum.

According to an embodiment, the momentum based gradient descent-type optimizer is a fully adaptive optimizer, wherein the fully adaptive optimizer performs adaptive optimization for one cycle independently of other cycles. That is, for example, the learning rate adaptation, the momentum resetting and the learning rate scheduling in one cycle is performed without using any knowledge or information about previous cycles. Summarized, there is only a single "search agent" (in the global optimization sense) or model state that is trained in a cycle. It further keeps memory of previously reached, locally optimal model states. Each locally optimal state is reached sequentially, by a potentially fully adaptive gradient descent cycle, or run, i.e., not by following a fixed, pre-determined schedule. Each local run can employ adaptive learning rate, momentum reset and even learning rate scheduling independently.

The step of selecting a globally optimal minimum is performed using a gradient-free optimization, thereby enabling the selection of a globally optimal minimum. I.e., no function as, for example, a loss function comprising a gradient is used, since such a function would result in a second landscape with second local minima so the global minimum would possibly not be found. The gradient descent technique is treated only as one component of this procedure, whereby a from-scratch training of efficient neural networks is enabled. Instead of basing the optimization process on concepts from the convex optimization field, it is proposed to use elements from non-convex global optimization. Among the found minima, which result from a locally convex shape of the loss function, a globally optimal one is selected using gradient-free optimization. The proposed method will reduce variance in the performance of a neural network as for example, a deep neural network, and thus improve the economic performance of products, such as an advanced driver assistance system (ADAS) product that relies on an efficient deep neural network (DNN).

According to an embodiment, the step of determining, in a plurality of successive cycles, a plurality of local minima further comprises a processing chain with following steps. First, a loss, i.e., for example, a loss resulting from correctly and falsely detected categories when processing a training dataset or a validation dataset, is calculated based on the loss function. If it is determined that a local minimum has not been reached, optimization parameters defining the state of the neural network are re-calculated, and the model is updated by providing the re-calculated optimization parameters to the neural network model. The processing chain of calculating the loss, determining if the local minimum is reached, re-calculating parameters, and updating the model is repeated until a stop criterion is reached. The stop criterion may, for example, be indicative of having found a local minimum.

For example a stop criterion that indicates that a minimum is found, may be that the gradient, i.e. the gradient of the loss function at the current dataset, turns from decreasing to increasing. Then, the previous update, i.e., the previous optimizer state may be seen as the state of the local minimum.

According to an embodiment, the step of selecting a globally optimal minimum in the loss landscape is performed under the condition that the result of the determination, whether the local minimum is reached, is positive. Selecting a globally optimal minimum comprises the step determining, if a stopping criterion is reached. If the stopping criterion is not reached, the following above introduced steps of the first component of the hybrid training procedure are performed: resetting optimization parameters defining the optimizer state of the optimizer, updating the model by providing the reset optimization parameters to the neural network model, and determining, in a plurality of successive cycles a plurality of local minima, in the loss landscape of the loss function.

According to an embodiment, the step of resetting the optimizer state comprises resetting intermediate parameters of the optimization state. In this way, new minima can be discovered effectively. Gradient descent-based optimizers such as Adam, may have a number of parameters which are updated on each optimization stage. The optimizer's state can be represented by storing these parameters. The parameters may differ from optimizer to optimizer. Examples are first and second order moment vectors, individual adaptive learning rates for different parameters of the model (weights) calculated from estimates of first and second moments of the gradients, the running average of recent magnitudes of the gradients for the weights (momentum), and the average of the second moments of the gradients. As there are further parameters, the parameters are not limited by the given examples.

According to an embodiment, the stopping criterion is one of the following. A first criterion may be, whether there is no more improvement when comparing a current and a previous relevant performance metric measured on validation dataset in the model states S[i]. A further criterion may be whether an improvement when comparing a current and a previous a relevant performance metric measured on validation dataset in the model states S[i] is less than a pre-defined minimum difference ΔKPImin. Other criteria may exist. For example, the number of resets or the number of parameter optimization may be limited to an absolute number. The presented conditions may be also combined in a logical manner to obtain a stop criterion.

The stopping criterion may alternatively, or in combination with the above described criterion be a global key performance indicator, KPI. A global KPI may be, for example, the reached accuracy, mean intersection over union (mIoU), classification performance, etc. Further, a KPI as stopping criterion may be a parameter directly related to an Advanced Driver Assistance System, e.g., detection a distance, a recognized scene, etc.

According to a further embodiment, the step of detecting a local minimum in a loss landscape comprises hyper-parameter tuning and/or transfer learning. I.e., optimization techniques such as hyper-parameter tuning, i.e., optimizing, for example, the learning rate, the batch size, the momentum, and/or the weight decay, and transfer learning, where, e.g., the knowledge of a first domain is used to train a second domain, may be used to reduce the number of restarts needed to reach the optimal globally minimum, or an approximately global minimum. According to a further embodiment, the neural network is a deep neural network, DNN. The method is especially suited for training a DNN from the scratch.

In an example, a data processing system, e.g., a computer, comprising means for carrying out the steps of the method is provided. The data processing system may comprise circuits without programmable logics or may be or comprise a micro controller, a field programmable gate array (FPGA), an ASIC, a Complex Programmable Logic Devices (CPLD), or any other programmable logic devices known to person skilled in the art.

According to a further aspect, a computer program is provided that comprises instructions, which, when the program is executed by a computer, cause the computer to carry out the steps of the method. The computer program element may be part of a computer program, but it can also be an entire program by itself. For example the computer program element may be used to update an already existing computer program to get to the present invention.

According to a further aspect, a computer-readable medium is provided, on which a computer program according to the previous claim is stored.. The computer readable medium may be seen as a storage medium, such as for example, a USB stick, a CD, a DVD, a data storage device, a hard disk, or any other medium on which a program element as described above can be stored.

The invention provides a training technique, especially the initialization of optimizer state during training, that can be used as a turn-key strategy for the from-scratch training of efficient neural networks that target automotive embedded hardware. The proposed method will reduce the variance in DNN performance and thus improve the economic performance of ADAS products that rely on efficient DNN. The proposed training procedure consists of a suitable number of restarts. Existing optimization techniques such as hyper-parameter tuning and transfer learning may be used to reduce the number of restarts needed to reach the global minimum, or an approximated global minimum.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
Fig. 1 shows a flow diagram of the computer-implemented method according to an embodiment,
Fig. 2 shows a neural network according to an embodiment,
Fig. 3 shows the method in view of the neural network.

The figures are merely schematic representations and serve only to illustrate embodiments of the invention. Identical or equivalent elements are in principle provided with the same reference signs.

### DESCRIPTION OF EMBODIMENTS

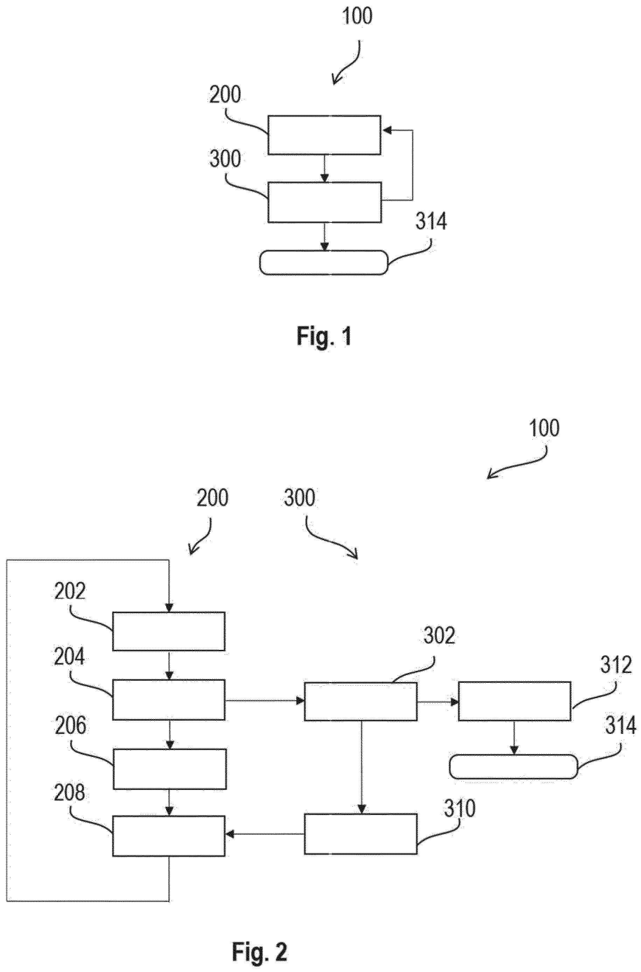

Fig. 1 shows a flow diagram of the computer-implemented method 100 for finding an globally optimal minimum of a loss function in a neural network 400.

Method 100 comprises two main steps, which are determining 200, in a plurality of successive cycles, a plurality of local minima, in a loss landscape of a loss function, and subsequently selecting 300 a globally optimal minimum. In 200, a gradient descent algorithm is used to find local minima, and in 300, a gradient-free algorithm is used to select the optimal of the found local minima. After finding a local minimum, the optimizer state is reset, so that the detection 200 can be restarted to find the next local minimum. The loss function may be a multidimensional function and may comprise loss values arising from an error of the output of the neural network with respect to a correct output, e.g. corresponding to a label of the input data, caused by the current state of the neural network. The loss function may, therefore, show gradients that depend on internal parameters as weights or biases for each of the neurons in each of the layers. The values of these parameters define the state of the neural network model. The multidimensional loss function may comprise several local minima, of which one may be a global minimum or a approximated global minimum. If one or more local minima have been found by step 200 or routine 200, respectively, then step or routine 300, is performed, where after checking a stop criterion the global minimum or an approximated global minimum is selected. It has to be noted that the case may occur, that after detecting the stop criterion, the absolute global minimum is not detected. However, the stop criterion may be chosen such that there is a good compromise between cost, i.e. essentially time, and improvement of performance of the neural network. The minimum found by this compromise is called "approximated global minimum" in this disclosure or "globally optimal minimum", which comprises also the absolute global minimum.

Fig. 2 shows the components, i.e., the routines 200 and 300 of method 100 in more detail. Method 200 comprises calculating 202 a loss using the loss function, determining 204 if the local minimum is reached. If the local minimum is not reached, the parameters defining the state of the neural network are re-calculated 206, i.e. the optimizer state Oi is updated. Such parameters are, for example, the weight of each neuron and the bias.

In the next step, the model is updated 208. Once the model is updated, the routine goes back to the first step, where the loss is re-calculated 202, with the effect that the key performance indicators KPIv, i.e., the relevant performance metric measured on validation dataset, and KPIt, i.e., the relevant performance metric measured on a training dataset are updated. If, however, in step 204, it is detected that the local minimum is reached, then the process of method 100 jumps to routine 300, where in step 302 it is determined, whether a global KPI criterion or another stopping criterion is reached or not. Such a criterion may be formulated as "no more improvement in model state S[i] measured by KPIv" or "improvement is less than ΔKPImin", where KPIv is a relevant performance metric measured on a validation dataset, S[i] a list to hold dictionaries of model states s, and ΔKPImin is the minimum difference in validation KPI, which is considered as an improvement. If the global KPI criterion, or another stopping criterion, is not reached, then in step 310, the best state is selected from the list S[i] by comparing the corresponding KPIv values, the hyper-parameters are selected from a predefined list P[i], and the state of the optimizer O is reset to its initial state O0.

It has to be stressed, that the complete state is reset and not just a single hyper-parameter such as a cyclic learning rate. The routine 300 then jumps back to the step of updating 208 the model of routine 200; and proceeding with a new cycle of the first method component 200, which is determining 200, in a plurality of successive cycles, a plurality of local minima in a loss landscape of a loss function, with the sub-steps 202, 204, and 206, 208 if in 204 the condition of having found a local minimum is not fulfilled. If in step 302 it is determined, that a global KPI criterion is reached, the globally optimal minimum is selected 312 out of the found local minima and the process of the method 100, i.e., the learning process is finished 314.

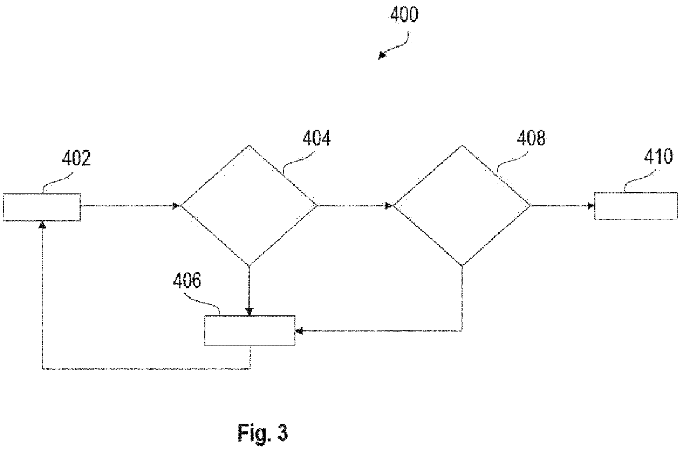

Fig. 3 shows the method 100 in view of the neural network 400. The neural network 400 may comprise model states s[i] 402 of the DNN, which are initialized with random parameters in state s0. From these states of model 402, the losses are calculated and passed to the first determiner 404, which is configured to determine whether a local minimum is reached or not. If not, this is signalled to the optimizer 406, which is responsible for calculating new values for the internal parameters, as weights and biases. These parameter values are passed to the model 402 for updating the state of the model 402. If, however, the first determiner 404 detected that a local minimum is reached, a second determiner 408 checks, whether a global KPI criterion is reached. If not, the second determiner 408 sends a signal to the optimizer 406 indicating that the optimizer has to be reset. If in 408 the KPI criterion is reached, in 410, the model uses the parameter values of the lowest local minimum, which is representing the globally optimal minimum, and uses the corresponding values of these parameters for its classification tasks. In this way, a momentum based gradient descent optimizer is used to find local minima in the loss landscape. From these minima, a globally optimal one is selected using gradient-free optimization. Possibly, there may be a further global minimum, which may have the same or even lower value. In this case, either the first global minimum or one of the further global minima is selected.

The proposed concept may be described as "valley hopping", where "valleys" are local minima in the loss landscape that are found by a gradient descent-type optimizer. The model state "hops" between different local minima until the global minimum is found, or suitably approximated.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. A computer-implemented method (100) for training a neural network model of an advanced driver assistance system, ADAS, wherein the neural network model is configured to perform scene recognition, comprising the steps:
determining (200), in a plurality of successive cycles, a plurality of local minima in a loss landscape of a loss function; wherein the loss function is based on the neural network's output for a training dataset; and
selecting (300) a globally optimal minimum in the loss landscape of the loss function out of the plurality of determined local minima using a gradient-free optimization;
wherein the step of determining (200) in a plurality of successive cycles a plurality of local minima in a loss landscape of a loss function comprises as an initial step for each cycle, resetting (310) an optimizer state of an optimizer of the neural network; wherein a performance of the neural network is evaluated using a key performance indicator, KPI, measured on a validation dataset; and wherein the key performance indicator is a recognized scene.

2. The computer-implemented method (100) according to claim 1, wherein the step of determining (200), in a plurality of successive cycles, a plurality of local minima in a loss landscape of a loss function is performed using a gradient descent-type optimizer exhibiting a momentum-based behaviour.

3. The computer-implemented method (100) according to claim 2, wherein the gradient descent-type optimizer is a fully adaptive optimizer, wherein the fully adaptive optimizer performs adaptive optimization for one cycle independently of other cycles.

4. The computer-implemented method (100) according to any of the previous claims, wherein the step of determining (200), in a plurality of successive cycles, a plurality of local minima further comprises a processing chain with following steps:
calculating (202) a loss based on the loss function;
determining (204) whether the local minimum is reached; if the local minimum is not reached;
re-calculating (206) optimization parameters defining the optimizer state of the optimizer; and
updating (208) the neural network model by providing the re-calculated optimization parameters to the neural network model;
wherein the processing chain is repeated until a stop criterion is reached.

5. The computer-implemented method (100) according to claim 3, wherein, the step of selecting (300) a globally optimal minimum in the loss landscape is performed under the condition that the result of the determination (204), whether the local minimum is reached, is positive; and selecting (300) a globally optimal minimum comprises the steps:
determining (302), if stopping criterion is reached; if a global key performance indicator is not reached,
performing the step of resetting (310) optimization parameters defining the optimizer state of the optimizer;
performing the step of updating (208) the neural network model by providing the reset optimization parameters to the neural network model; and
performing the step determining (200), in a plurality of successive cycles a plurality of local minima, in the loss landscape of the loss function.

6. The computer-implemented method (100) according to any of the previous claims, wherein the step of resetting (310) the optimizer state comprises resetting intermediate parameters of the optimization state.

7. The computer-implemented method (100) according to claim 5, wherein the stopping criterion is:
whether there is no more improvement when comparing a current and a previous relevant performance metric measured on a validation dataset in the model states S[i], or
whether an improvement when comparing a current and a previous a relevant performance metric measured on a validation dataset in the model states S[i] is less than a pre-defined minimum difference ΔKPImin between the previous and the relevant performance metric.

8. The computer-implemented method (100) according to any of the previous claims, wherein the step detecting (200) a local minimum in a loss landscape comprises hyper-parameter tuning and/or transfer learning.

9. The computer-implemented method (100) according to any of the previous claims, wherein the neural network is a deep neural network, DNN.

10. A computer program, comprising instructions which, when the program element is executed by a computer, cause the computer to carry out the steps of the method (100) of any of claims 1 to 9.

11. A computer-readable medium on which a computer program according to claim 10 is stored.

## Patentansprüche

1. Computerimplementiertes Verfahren (100) zum Trainieren eines neuronalen Netzmodells eines fortgeschrittenen Fahrerassistenzsystems, ADAS (advanced driver assistance system), wobei das neuronale Netzmodell zum Durchführen einer Szenenerkennung ausgelegt ist, umfassend die Schritte:
Bestimmen (200), in einer Vielzahl von aufeinanderfolgenden Zyklen, einer Vielzahl von lokalen Minima in einer Verlustlandschaft einer Verlustfunktion; wobei die Verlustfunktion auf der Ausgabe des neuronalen Netzwerks für einen Trainingsdatensatz basiert; und
Auswählen (300) eines global optimalen Minimums in der Verlustlandschaft der Verlustfunktion aus der Vielzahl von bestimmten lokalen Minima unter Verwendung einer gradientenfreien Optimierung;
wobei der Schritt des Bestimmens (200) in einer Vielzahl von aufeinanderfolgenden Zyklen einer Vielzahl von lokalen Minima in einer Verlustlandschaft einer Verlustfunktion als einen anfänglichen Schritt für jeden Zyklus ein Zurücksetzen (310) eines Optimiererzustands eines Optimierers des neuronalen Netzwerks umfasst; wobei eine Leistung des neuronalen Netzwerks unter Verwendung eines Schlüsselleistungsindikators, KPI (key performance indicator), gemessen an einem Validierungsdatensatz, bewertet wird; und wobei der Schlüsselleistungsindikator eine erkannte Szene ist.

2. Computerimplementiertes Verfahren (100) nach Anspruch 1, wobei der Schritt des Bestimmens (200), in einer Vielzahl von aufeinanderfolgenden Zyklen, einer Vielzahl von lokalen Minima in einer Verlustlandschaft einer Verlustfunktion unter Verwendung eines Optimierers vom Gradientenabstiegstyp, der ein impulsbasiertes Verhalten aufweist, durchgeführt wird.

3. Computerimplementiertes Verfahren (100) nach Anspruch 2, wobei der Optimierer vom Gradientenabstiegstyp ein vollständig adaptiver Optimierer ist, wobei der vollständig adaptive Optimierer eine adaptive Optimierung für einen Zyklus unabhängig von anderen Zyklen durchführt.

4. Computerimplementiertes Verfahren (100) nach einem der vorhergehenden Ansprüche, wobei der Schritt des Bestimmens (200), in einer Vielzahl von aufeinanderfolgenden Zyklen, einer Vielzahl von lokalen Minima ferner eine Verarbeitungskette mit folgenden Schritten umfasst:
Berechnen (202) eines Verlusts basierend auf der Verlustfunktion;
Bestimmen (204), ob das lokale Minimum erreicht ist; falls das lokale Minimum nicht erreicht ist;
Neuberechnen (206) von Optimierungsparametern, die den Optimiererzustand des Optimierers definieren; und
Aktualisieren (208) des neuronalen Netzmodells durch Bereitstellen der neuberechneten Optimierungsparameter an das neuronale Netzmodell;
wobei die Verarbeitungskette wiederholt wird, bis ein Stoppkriterium erreicht ist.

5. Computerimplementiertes Verfahren (100) nach Anspruch 3, wobei der Schritt des Auswählens (300) eines global optimalen Minimums in der Verlustlandschaft unter der Bedingung durchgeführt wird, dass das Ergebnis der Bestimmung (204), ob das lokale Minimum erreicht ist, positiv ist; und das Auswählen (300) eines global optimalen Minimums die Schritte umfasst:
Bestimmen (302), ob ein Stoppkriterium erreicht ist; falls ein globaler Schlüsselleistungsindikator nicht erreicht ist,
Durchführen des Schritts des Zurücksetzens (310) von Optimierungsparametern, die den Optimiererzustand des Optimierers definieren;
Durchführen des Schritts des Aktualisierens (208) des neuronalen Netzmodells durch Bereitstellen der zurückgesetzten Optimierungsparameter an das neuronale Netzmodell; und
Durchführen des Schritts des Bestimmens (200), in einer Vielzahl von aufeinanderfolgenden Zyklen einer Vielzahl von lokalen Minima, in der Verlustlandschaft der Verlustfunktion.

6. Computerimplementiertes Verfahren (100) nach einem der vorhergehenden Ansprüche, wobei der Schritt des Zurücksetzens (310) des Optimiererzustands ein Zurücksetzen von Zwischenparametern des Optimierungszustands umfasst.

7. Computerimplementiertes Verfahren (100) nach Anspruch 5, wobei das Stoppkriterium ist:
ob es keine weitere Verbesserung gibt, wenn eine aktuelle und eine vorherige relevante Leistungsmetrik, gemessen an einem Validierungsdatensatz in den Modellzuständen S[i], verglichen werden, oder
ob eine Verbesserung, wenn eine aktuelle und eine vorherige relevante Leistungsmetrik, gemessen an einem Validierungsdatensatz in den Modellzuständen S[i], verglichen werden, geringer ist als eine vordefinierte Mindestdifferenz ΔKPImin zwischen der vorherigen und der relevanten Leistungsmetrik.

8. Computerimplementiertes Verfahren (100) nach einem der vorhergehenden Ansprüche, wobei der Schritt des Detektierens (200) eines lokalen Minimums in einer Verlustlandschaft Hyperparameter-Tuning und/oder Transferlernen umfasst.

9. Computerimplementiertes Verfahren (100) nach einem der vorhergehenden Ansprüche, wobei das neuronale Netzwerk ein tiefes neuronales Netzwerk, DNN (deep neural network), ist.

10. Computerprogramm, umfassend Anweisungen, die, wenn das Programmelement von einem Computer ausgeführt wird, den Computer veranlassen, die Schritte des Verfahrens (100) nach einem der Ansprüche 1 bis 9 auszuführen.

11. Computerlesbares Medium, auf dem ein Computerprogramm nach Anspruch 10 gespeichert ist.

## Revendications

1. Procédé (100) mis en œuvre par ordinateur d'entraînement d'un modèle de réseau neuronal d'un système avancé d'aide à la conduite, ADAS, dans lequel le modèle de réseau neuronal est configuré pour réaliser une reconnaissance de scène, comprenant les étapes suivantes :
la détermination (200), dans une pluralité de cycles successifs, d'une pluralité de minimums locaux dans un paysage de perte d'une fonction de perte ; dans lequel la fonction de perte est basée sur la sortie du réseau neuronal pour un ensemble de données d'entraînement ; et
la sélection (300) d'un minimum globalement optimal dans le paysage de perte de la fonction de perte parmi la pluralité de minimums locaux déterminés à l'aide d'une optimisation sans gradient ;
dans lequel l'étape de détermination (200) dans une pluralité de cycles successifs d'une pluralité de minimums locaux dans un paysage de perte d'une fonction de perte comprend comme étape initiale pour chaque cycle, la réinitialisation (310) d'un état optimiseur d'un optimiseur du réseau neuronal ; dans lequel une performance du réseau neuronal est évaluée à l'aide d'un indicateur clé de performance, KPI, mesuré sur un ensemble de données de validation ; et dans lequel l'indicateur clé de performance est une scène reconnue.

2. Procédé mis en œuvre par ordinateur (100) selon la revendication 1, dans lequel l'étape de détermination (200), dans une pluralité de cycles successifs, d'une pluralité de minimums locaux dans un paysage de perte d'une fonction de perte est réalisée à l'aide d'un optimiseur de type descente de gradient présentant un comportement basé sur le mouvement.

3. Procédé mis en œuvre par ordinateur (100) selon la revendication 2, dans lequel l'optimiseur de type descente de gradient est un optimiseur entièrement adaptatif, dans lequel l'optimiseur entièrement adaptatif réalise une optimisation adaptative pour un cycle indépendamment d'autres cycles.

4. Procédé mis en œuvre par ordinateur (100) selon l'une quelconque des revendications précédentes, dans lequel l'étape de détermination (200), dans une pluralité de cycles successifs, d'une pluralité de minimums locaux comprend également une chaîne de traitement avec les étapes suivantes :
le calcul (202) d'une perte sur la base de la fonction de perte ;
le fait de déterminer (204) si le minimum local est atteint ; si le minimum local n'est pas atteint ;
le fait de recalculer (206) des paramètres d'optimisation définissant l'état optimiseur de l'optimiseur ; et
la mise à jour (208) du modèle de réseau neuronal en fournissant les paramètres d'optimisation recalculés au modèle de réseau neuronal ;
dans lequel la chaîne de traitement est répétée jusqu'à ce qu'un critère d'arrêt soit atteint.

5. Procédé mis en œuvre par ordinateur (100) selon la revendication 3, dans lequel, l'étape de sélection (300) d'un minimum globalement optimal dans le paysage de perte est réalisée à condition que le résultat de la détermination (204), si le minimum local est atteint, soit positif ; et la sélection (300) d'un minimum globalement optimal comprend les étapes suivantes :
la détermination (302), si le critère d'arrêt est atteint ; si un indicateur clé global de performance n'est pas atteint,
la réalisation de l'étape de réinitialisation (310) de paramètres d'optimisation définissant l'état optimiseur de l'optimiseur ;
la réalisation de l'étape de mise à jour (208) du modèle de réseau neuronal en fournissant les paramètres d'optimisation réinitialisés au modèle de réseau neuronal ; et
la réalisation de l'étape de détermination (200), dans une pluralité de cycles successifs d'une pluralité de minimums locaux, dans le paysage de perte de la fonction de perte.

6. Procédé mis en œuvre par ordinateur (100) selon l'une quelconque des revendications précédentes, dans lequel l'étape de réinitialisation (310) de l'état d'optimisation comprend la réinitialisation de paramètres intermédiaires de l'état d'optimisation.

7. Procédé mis en œuvre par ordinateur (100) selon la revendication 5, dans lequel le critère d'arrêt est :
s'il n'y a plus d'amélioration lors de la comparaison d'une métrique de performance pertinente actuelle et précédente mesurée sur un ensemble de données de validation dans les états de modèle S[i], ou
si une amélioration lors de la comparaison d'une métrique de performance pertinente actuelle et précédente mesurée sur un ensemble de données de validation dans les états de modèle S[i] est inférieure à une différence minimale prédéfinie ΔKPImin entre la métrique de performance précédente et pertinente.

8. Procédé mis en œuvre par ordinateur (100) selon l'une quelconque des revendications précédentes, dans lequel l'étape de détection (200) d'un minimum local dans un paysage de perte comprend un réglage d'hyper-paramètres et/ou un apprentissage par transfert.

9. Procédé mis en œuvre par ordinateur (100) selon l'une quelconque des revendications précédentes, dans lequel le réseau neuronal est un réseau neuronal profond, DNN.

10. Programme d'ordinateur, comprenant des instructions qui, lorsque l'élément de programme est exécuté par un ordinateur, amènent l'ordinateur à effectuer les étapes du procédé (100) selon l'une quelconque des revendications 1 à 9.

11. Support de stockage lisible par ordinateur sur lequel un programme informatique selon la revendication 10 est stocké.
